# EUROPEAN PATENT APPLICATION

(11) **EP 3 023 901 A1**
(43) Date of publication of application: **25.05.2016**
(21) Application number: 14194327.4
(22) Date of filing: 21.11.2014
(51) Int. Cl.: G06F 21/62, G06F 17/30

(54) **Secure document indexing**

(71) Applicant: Atos IT Solutions and Services GmbH, 81739 München (DE)
(72) Inventor: Remmel, Felix, 52076 Aachen (DE)
(74) Representative: Patentanwaltskanzlei WILHELM & BECK

(57) **Abstract**

A storage is adapted for holding encrypted documents. A method for retrieving, from the storage, a document that comprises a predetermined word, comprises steps of: determining, by a client, an encrypted identification of the word, transmitting the identification from the client to the storage system, determining, by the storage system, on the basis of the identification, an encrypted list of references to at least one of the stored documents that comprises the word, transmitting the encrypted list from the storage system to the client, decrypting, by the client, the list, and requesting, by the client, from the storage system, at least one encrypted document, using as document reference an element of the list.

## Description

Present invention concerns cloud computing. More specifically, present invention concerns a technique for securely retrieving documents from a storage.

It has become common practice to store documents on a public server that is managed as a cloud computer or cloud service. In this, there may be several hosts on which portions of the files may be stored and which are managed such that the physical location of data on one of the hosts is completely transparent to a user of the file service. One provider may offer the file server to different customers and make sure that no costumer has access to the files of the other customers. However, such documents often contain sensitive data so that they require special protection against misuse or propagation. One way of securing the data for instance is to encrypt the files before they are sent to the publically accessible storage. However, this makes certain operations on the storage files difficult or expensive.

For instance, if one client wishes to access all documents that comprise a certain word, i.e. the client wishes to search for the word in a number of files in the storage, either the remote computer controlling the storage has some kind of access to the contents of the files and can perform the search, or the client is required to retrieve each of the files and do the search on his side. The first solution is undesirable from a security perspective while the second solution requires a lot of bandwidth, a lot of local storage and possibly considerable computing powers.

US 2013/0046974 A1 proposes a solution where a searchable index is held on the server side. However, this solution may yield a lot of information about the stored files to an attacker on the server or between the server and the client.

US 8 533 489 B2 uses a similar approach. However, combination of different queries such as AND, OR and others is very cost-intensive. Other operations like updating the index on the server may also come at a high cost.

It is therefore an object of present invention to provide a technique for improved search and retrieval in a repository of encrypted documents. Present invention solves these objectives to a method, a computer program product and a system according to the enclosed independent claims. Dependent claims define advantageous embodiments.

A storage system is adapted for holding encrypted documents. A method for retrieving, from the storage system, a document that comprises a predetermined word, comprises steps of: determining, by a client, an encrypted identification of the word, transmitting the identification from the client to the storage system, determining, by the storage system, on the basis of the identification, an encrypted list of references to at least one of the stored documents that comprises the word, transmitting the encrypted list from the storage system to the client, decrypting, by the client, the list, and requesting, by the client, from the storage system, at least one encrypted document, using as document reference an element of the list.

The method may have an advantageously low cost for accessing the file on the basis of the word it contains. In practice, a complexity of O(1) may be achieved. Thus the method may perform very well and be suited for large installations with many users or many store files.

In addition, security of the proposed method may be very high. On the service side, very little is known about which document comprises which word. As long as the used encryption is not broken, plane text data may not be retrieved on the service side. Even if the used cryptography for generating the encrypted identification of the word is broken, an attacker may only test the documents word by word. A backwards analysis, which document comprises which words, may not be possible.

It is preferred that the encrypted identification is determined on the basis of a cryptographic hash function in combination with a secret key.

This technique is also known as keyed-hash message authentication code HMAC. Various different implementations for HMAC are known, such as HMAC-SHA1 and HMAC-MD5, which are used within IPsec and TLS protocols. With the cryptographic hash function, both data integrity and authentication may be performed. This approach may be cost-efficient and secure.

It is preferred that the client determines and transmits to the storage system encrypted identifications for several words and the storage system determines and transmits back several corresponding lists of references.

In other words, the client may search for several words in one go. The remote repository, i.e. the storage system or file server will respond such that the relationship between a word and its corresponding list of references will be maintained.

In one option, the client performs Boolean algebra on the references of the lists according to a predetermined Boolean relationship of the words. In this, the client retrieves the encrypted document on the basis of the result. That is to say, if the client wishes to retrieve a document on the basis of a logical combination of words it contains, the client may request reference lists for each of the words and perform the appropriate logical combinations on the elements of the lists. Thus, logical combinations of occurrences of words in files will not be known on the service side. Transmitting entire documents from the storage system to the client is not required in order to make the logical connections.

According to another advantageous embodiment, the client adds to his document request another document reference that is not found in the decrypted lists of references. By requesting bogus documents, the storage system may be confused so that an attacker on the side of the storage system will have even less information about which document contains which words.

It is preferred that cryptographic mechanisms and/or cryptographic keys of the encrypted list and of the encrypted document are different. If one of the mechanisms is broken, the other mechanism will still hold and maintain a certain level of security. Especially, breaking the cryptography used for the encrypted lists will leave an attacker still unable to decrypt any document on the storage system.

A computer program product comprises program code means for performing said method when the computer program product is running on a processing device or stored on a computer readable medium.

A storage system for holding encrypted documents comprises a storage for storing the encrypted documents, an interface for sending or receiving information to or from a client and a processing unit. In this, the processing unit is adapted to receive, from the client, an encrypted identification of a word, to determine, on the basis of the identification, an encrypted list of references to at least one of the documents that comprises the word, transmit, to the client, the encrypted list, receive, from the client, at least one reference to a stored document, the reference having been determined on the basis of the list, retrieve, from the storage, the at least one referenced encrypted document and return, to the client, the at least one encrypted document.

The system may run as part of a cloud-based computer service. It may be easy to equip a known cloud-based computer service such that it supports the above described technique for search and retrieval of documents.

It is preferred that the system further comprises a memory for holding encrypted identifications and associated lists of references. The memory may be part of the storage for storing the encrypted documents or be set aside from the storage. It is especially preferred that the memory has fast access times, such as to speed up the process of determining the lists of references.

In one embodiment, the memory is adapted to hold a hash table, so that the list of references that is associated to an encrypted identification may be determined quickly and with little computing effort.

In yet another embodiment, at least some of the lists comprise bogus entries and all lists have the same number of entries. In this case, an attacker will not even be aware of the number documents that comprises a certain word.

In an alternative embodiment, at least some of the lists comprise bogus entries and the number of entries of each list matches one of a series of predetermined numbers. For example, a list may have one of three different predetermined sizes. If the list is smaller than the smallest size, it will be stuffed with bogus entries until it reaches the smallest size. If its size lies between the first and the second size, the list is stuffed until it reaches the second size. If it holds anymore entries than the second size, it is stuffed up to the third size. This approach permits the efficient transfer of lists that very greatly in actual size. At the same time an attacker gets significantly less information about the number of meshing documents than without bogus entries. The number of transmitted bogus entries may thus be kept at a reasonable fraction of the actual payload.

The invention will now be explained in more detail with reference to the enclosed drawings in which:
- Fig. 1: shows a system with a client and a storage;
- Fig. 2: shows a flow chart of a method for retrieving a document from the storage system in Fig. 1; and
- Fig. 3: shows one embodiment for lists of references to documents in the storage system Fig. 1.

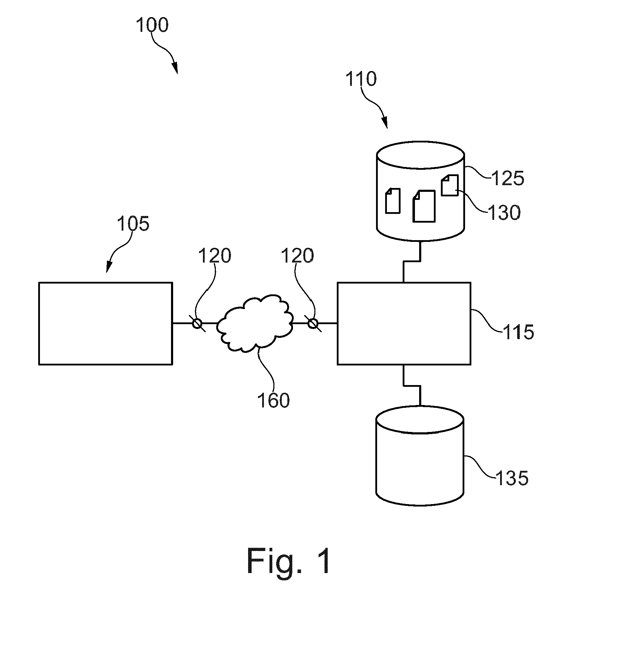

Fig. 1 shows a storage system 100 with a client 105 and a storage system 110. The storage system 100 can also be viewed as a file server or as a cloud-based file storage. The client 105 may comprise a known microcomputer, especially for use by a single user or a group of users. The storage system 110 may comprise one or several computers that may be interconnected via a network. In one embodiment, several computers may be spread over a physical region that may span different countries. However, the storage system 110 is usually run as a remote repository the internal organisation of which will be transparent to the client 105. For the purposes of present document, the storage system 110 is assumed to have only one processing unit 115 such as a programmable microcomputer. The storage system 110 furthermore comprises a storage 125 for storing files or documents 130 and preferably a memory 135 for holding certain index information, the meaning of which will be described further down below.

The client 105 is preferred to also comprise an interface 120, wherein the interfaces 120 of the client 105 and the storage system 110 can both connected to a network 140 that may especially be a computer network and be connected to or a part of the Internet.

It is proposed that the client 105, wishing to retrieve a document 130 comprising a predetermined word will generate a certain encrypted identification for the word and transmit it to the storage system 110. The storage system 110, unable to decrypt the identification, determines an encrypted list of references to documents 130 that comprise the word. The storage system 110 sends back the list of references to the client 105, which decrypts it and possibly selects those references it finds useful. Then it requests, on the basis of these references, from the storage system 110 the appropriate document 130.

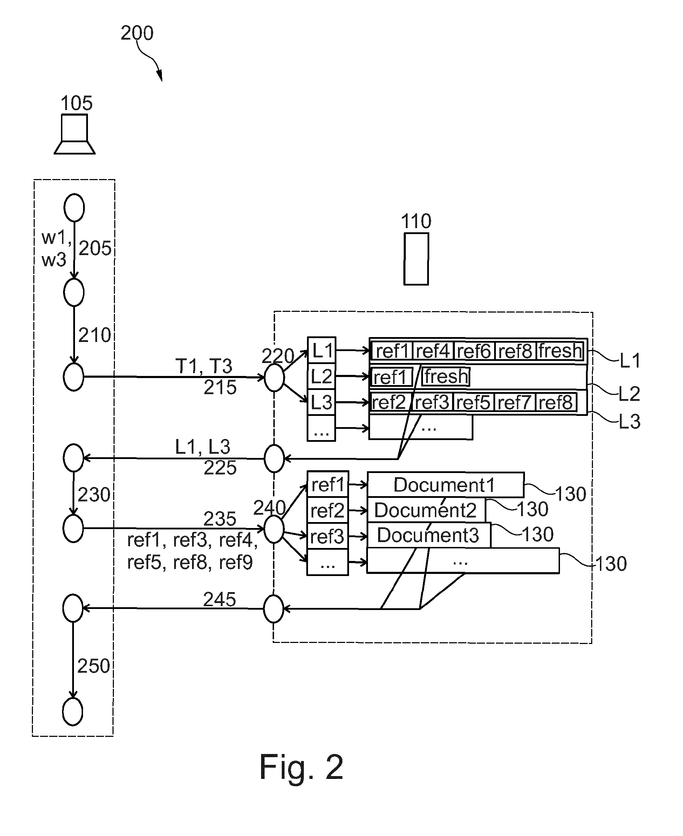

This procedure will be discussed in more detail with reference to Fig. 2. Fig. 2 shows a flowchart of a method 200 for retrieving a document 130 from the storage system 110 in Fig. 1. On the left hand side, steps that are performed by the client 105 are shown, while on the right hand side those steps that are carried out by the storage system 110 are indicated. The example that is used for explaining method 200 is purely exemplary and not intended to limit the scope of the invention.

In a first step 205, the client 105 chooses to retrieve a document 130 from the storage system 110 that comprises both words W1 and W3. To this ends, the client 105 generates in a step 210 an encrypted identification T1 for word W1 and another encrypted identification T3 for word W3. It is preferred that the generated identifications W1 and W3 are encrypted so that it is advantageous to perform both the generation and the encryption part in one step, for instance by generating a keyed-hash message authentication code HMAC. Any cryptographic hash function, such as MD5 or SHA-1, may be used in the calculation of the HMAC. The key that is used for the cryptographic hashing will be kept secret. Especially, the key will not be made available to the storage system 110.

The identifications T1 and T3 are then transmitted to the storage system 110 in a step 215.

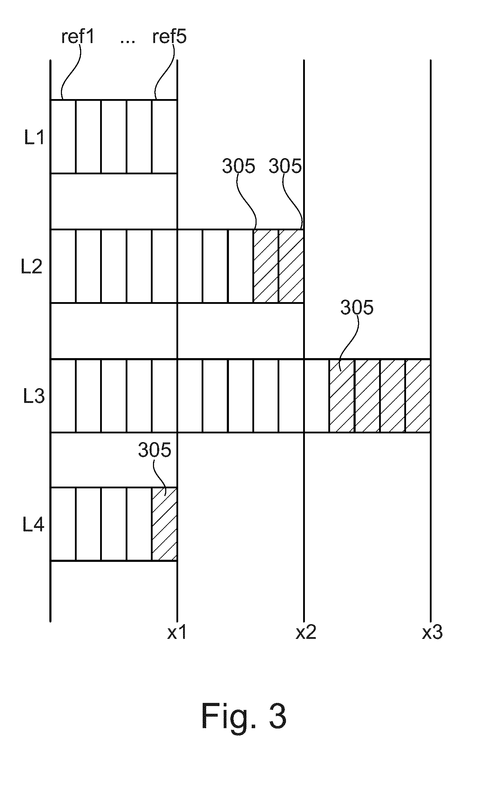

Next, in a step 220, the storage system 110 determines for each identification T1, T3 a list L1, L3 containing references ref1, ref2, ..., ref8 to documents 130. The lists L1, L2, L3 are available on the encrypted format to the storage system 110. In a preferred embodiment, a hash table is kept on the storage system 110 and identifications T1, T3 are used to generate hash keys C1, C3, to which the lists L1, L3 are the associated data objects of the hash table. In one option, the lists L1, L2, L3 may comprise information beyond the references ref1, ..., ref8. This will be explained in more detail below with reference to Fig. 3.

In a step 225 the retrieved encrypted lists L1, L3 are transmit to the client 105. Upon reception, the client 105 decrypts the received lists L1, L3 in a step 230. The client 105 may now optionally perform Boolean algebra to determine references that point to documents that match a corresponding Boolean expression between words W1, W3. In present example there is only one document 130 that is referenced with ref8 in both lists L1 and L3. The client 105 may then request the appropriate document 130 using the determined reference, ref8 in present example. However, for providing a better understanding for the proposed method 200, it is assumed that documents 130 matching references ref1, ref3, ref4, ref5, ref6 and ref8 are requested in a step 235. The storage system 110 retrieves documents 130 on the basis of the received requests ref1, ... in a step 240 and returns them in a step 245.

To enhance security, unnecessary information or requests may be introduced at various points of method 200. For instance, the request of client 105 in step 235 may comprise more references ref1, ..., ref8 than strictly necessary. The additional references may be made up or correspond to a different word W4 that may have been queried earlier on storage system 110. The additional references may also come from the lists L1, L3 received by the client 105 in step 225 before the Boolean combination between elements of the lists was performed. In this case, the storage system 110 will return more documents 130 in step 245 than required to fulfil the task given in step 205. In an optional step 250, the client 105 may discard of information it does not need.

As different words W1, W3 generally occur with different frequencies in documents 130 of a given set, the lists L1, L2, L3 tend to have different numbers of entries i.e. different sizes. In order to reduce the amount of information an attacker on storage system 110 or an eves dropper connected to the network 140 may obtain, at least one of the lists L1, L2, L3 may be stuffed with one or more bogus entries so that lengths of the lists L1, L2, L3 match better. In one embodiment, all lists L1, L2, L3 are stuffed to have the same length.

Another option for reducing the amount of disclosed information is shown below in Fig. 3. From top to bottom, four exemplary lists L1, L2, L3 and L4 are displayed. Each list comprises a number of references ref1, ..., ref8. For sizes or lengths of the lists L1 to L4, predetermined limits X1, X2 and X3 are given. In present embodiment, the number of references between zero and X1 is the same as between X1 and X2 and between X2 and X3. However, different distances between the limits X1, X2, X3 and a different number of limits may also be used.

Each list is stuffed with bogus entries 305 until the size of the list L1 to L4 reaches the closest limit X1 to X3. List L1 comprises a number of references that matches the limit X1, no bogus entry 305 is supplied. List L2 in this example is two entries short of the limit X2, therefore two bogus entries 305 are supplied. Similarly, L3 is supplied four bogus entries 305 so that length of the stuffed list L3 matches the upper limit X3. L4 gets one bogus entry 305 to reach the lower limit X1.

### Reference List

- 100: system
- 105: client
- 110: storage system
- 115: processing unit
- 120: interface
- 125: storage
- 130: document
- 135: memory
- 140: network

- 200: method
- 205: task: retrieve document containing W1 AND W3
- 210: generate identification T1 for W1 and identification T3 for W3
- 215: transmit identifications T1 and T3 to storage system 110
- 220: determine encrypted lists of references
- 225: transmit encrypted lists
- 230: decrypt received lists
- 235: request document
- 240: retrieve document
- 245: return document

- 305: bogus reference / bogus entry

## Claims

1. Method (200) for retrieving, from a storage system (110) for encrypted documents (130), a document (130) that comprises a predetermined word (W1, W3), wherein the method (200) comprises steps of:
- determining (210), by a client (105), an encrypted identification (T1, T3) of the word (W1, W3) ;
- transmitting (215) the identification (T1, T3) from the client (105) to the storage system (110);
- determining (220), by the storage system (110), on the basis of the identification (T1, T3), an encrypted list (L1, L3) of references (ref, ..., ref8) to at least one of the stored documents (130) that comprises the word (W1, W3);
- transmitting (225) the encrypted list (L1, L3) from the storage system (110) to the client (105);
- decrypting (230), by the client (105), the list (L1, L3);
- requesting (235), by the client (105), from the storage system (110), at least one encrypted document (130), using as document reference (ref, ..., ref8) an element of the list (L1, L3).

2. Method (200) according to claim 1, wherein the encrypted identification (T1, T3) is determined on the basis of a cryptographic hash function in combination with a secret key.

3. Method (200) according to one of the above claims, wherein the client (105) determines and transmits to the storage system (110) encrypted identifications (T1, T3) for several words (W1, W3) and the storage system (110) determines and transmits back several corresponding lists (L1, L3) of references (ref, ..., ref8).

4. Method (200) according to claim 3, wherein the client (105) performs Boolean algebra on the references (ref, ..., ref8) of the lists (L1, L3) according to a predetermined Boolean relationship of the words (W1, W3) and wherein the client (105) retrieves the encrypted document (130) on the basis of the result.

5. Method (200) according to one of the above claims, wherein the client (105) adds to his document request another document reference (ref, ..., ref8) that is not found in the decrypted lists (L1, L3) of references (ref, ..., ref8).

6. Method (200) according to one of the above claims, wherein cryptographic mechanisms and/or cryptographic keys of the encrypted list (L1, L3) and the encrypted document (130) are different.

7. Computer program product comprising program code means for performing a method (200) according to one of the above claims when the computer program product is running on a processing device (105, 110) or stored on a computer readable medium.

8. Storage system (110) for holding encrypted documents (130), wherein the storage system (110) comprises:
- a storage (125) for storing the encrypted documents (130);
- an interface (120) for sending or receiving information to or from a client (105);
- a processing unit (115) that is adapted to:
• receive, from the client (105), an encrypted identification (T1, T3) of a word (W1, W3);
• determine, on the basis of the identification (T1, T3), an encrypted list (L1, L3) of references to at least one of the documents (130) that comprises the word (W1, W3);
• transmit, to the client (105), the encrypted list (L1, L3);
• receive, from the client (105), at least one reference (ref, ..., ref8) to a stored document (130), the reference (ref, ..., ref8) having been determined on the basis of the list (L1, L3);
• retrieve, from the storage (125), the at least one referenced encrypted document (130), and
• returning, to the client (105), the at least one encrypted document (130).

9. System (110) according to claim 8, further comprising a memory (135) for holding encrypted identifications (T1, T3) and associated lists (L1, L3) of references (ref, ..., ref8).

10. System (110) according to claim 8 or 9, wherein at least some of the lists (L1, L3) comprise bogus entries (305) and all lists (L1, L3) have the same number of entries.

11. System (110) according to claim 8 or 9, wherein at least some of the lists (L1, L3) comprise bogus entries (305) and the number of entries of each list (L1, L3) matches one of a series of predetermined numbers (X1, X2, X3).
